# EUROPEAN PATENT APPLICATION

(11) **EP 4 467 915 A1**
(43) Date of publication of application: **27.11.2024**
(21) Application number: 23743542.5
(22) Date of filing: 20.01.2023
(51) Int. Cl.: F28D 20/00, F28F 13/00, F28F 1/34, F28F 1/14, H05B 3/16, F17D 3/01, F17D 1/08

(54) **DEVICE FOR STORING ELECTRICITY AND HIGH-TEMPERATURE ENERGY**

(30) Priority: 21.01.2022 KR 20220009404
(71) Applicant: Korea Advanced Institute of Science and Technology, Daejeon 34141 (KR)
(72) Inventor: CHANG, Daejun, Daejeon 34141 (KR); CHE, Sanghyun, Daejeon 34141 (KR)
(74) Representative: Cousens, Nico
(86) International application number: PCT/KR2023/001050
(87) International publication number: WO 2023/140699

(57) **Abstract**

The present invention relates to an electrical and high-temperature energy storage device. An objective of the present invention is to provide an electrical and high-temperature energy storage device which may smoothly store both high-temperature energy and electrical energy of various qualities, and may be conveniently operated and managed to thus have a range of use much more expanded than a conventional device. In more detail, an objective of the present invention is to provide an electrical and high-temperature energy storage device which may use an easy-to-handle working fluid, such as water or air, and may be operated to store heat energy directly in a heat storage medium by using the high-temperature working fluid, or convert electrical energy to the heat energy and store the converted energy therein, and then recovering the heat energy by using the low-temperature working fluid when necessary.

## Description

### [Technical Field]

The present invention relates to an electrical and high-temperature energy storage device, and more particularly, to an electrical and high-temperature energy storage device which may convert high-temperature energy generated by solar energy or the like, or electricity generated by wind power, solar energy, or the like into high-temperature energy and store the same.

### [Background Art]

Energy consumption is currently being maximized due to industrial development, and various research studies are actively being conducted to prevent waste of energy and utilize the energy more efficiently. One of these research studies is an energy storage system (ESS), and the ESS is operated to store excess power produced by solar or wind power generation, which is difficult to adjust a load, and transmits the stored power when a temporary power shortage occurs.

A molten salt method may be an example of a high-temperature energy storage device. In the case of a solar thermal method, surplus solar heat may be collected to increase a temperature of synthetic oil or the like, and used as a working fluid and stored in the form of heat energy in molten salt. That is, the heat energy may be stored as the heat energy. Meanwhile, in the case of the solar or wind power, surplus electrical energy may be converted to the heat energy, and similarly, the heat energy may then be stored in molten salt in the form of heat energy. Power generation may be performed using the energy included in the high-temperature molten salt stored at a time point when the electricity is needed. This case uses a principle of converting the electrical energy to the heat energy and storing the converted energy.

In addition to the molten salt method, a method of storing the electrical energy in a battery has also been traditionally used when generating the power such as the solar or wind power. When the surplus power is large, a battery storage method is uneconomical, and the method of converting the electrical energy to the heat energy and storing the converted energy is more widely used. As an example, Korean Patent Publication No. 2007-0022679 ("Method and Apparatus for Storing Heat Energy", published on February 27, 2007) discloses a device which may heat an inner region of a graphite body when it is necessary to store the heat energy and recover heat by a heat exchanger when it is necessary to use the heat energy in order to store the electrical energy or renewable energy during a supply off-peak period.

This energy storage device technology is currently undergoing active research and development. Accordingly, in most cases, this technology may be designed to be optimized for a development purpose, and thus often have a rather narrow scope of use. For example, the molten salt heat storage device described above may be very suitable for storing the high-temperature energy, especially, the heat energy by using the solar thermal method. However, in order to be used for solar or wind power, this storage device requires a separate device converting the electricity to heat, and may often be unsuitable for use because the storage device is not good for storing low-quality electrical energy. In addition, the molten salt heat storage device uses molten salt as its working fluid. It is thus necessary to maintain salt in a molten state, whose solidification makes its operation and management difficult.

### [Related Art Document]

### [Patent Document]

(Patent Document 1) Korean Patent Publication No. 2007-0022679 ("Method and Apparatus for Storing Heat Energy", published on February 27, 2007)

### [Disclosure]

### [Technical Problem]

An objective of the present invention is to provide an electrical and high-temperature energy storage device which may smoothly store both high-temperature energy and electrical energy of various qualities, and may be conveniently operated and managed to thus have a much more expanded range of use than a conventional device. In more detail, an objective of the present invention is to provide an electrical and high-temperature energy storage device which may use an easy-to-handle working fluid, such as water or air, and may be operated to store heat energy directly in a heat storage medium by using the high-temperature working fluid, or convert electrical energy to the heat energy and store the converted energy therein, and then recovering the heat energy by using the low-temperature working fluid when necessary.

### [Technical Solution]

In one general aspect, provided is an electrical and high-temperature energy storage device 100, the device including: a heat storage medium tank 110 which accommodates a heat storage medium 210; and a heat transfer pipe 120 which has a pipe shape, through which a working fluid 220 is distributed, the working fluid 220 being distributed between a high-temperature energy source 510 and a low-temperature energy source 520, the high-temperature energy source 510 providing a relatively high temperature environment, and the low-temperature energy source 520 providing a relatively low temperature environment, through a working fluid distribution port 121 disposed at each of two ends, which has a portion accommodated in the heat storage medium tank 110, and a heating device heated by power is at least partially disposed at the portion accommodated in the heat storage medium tank 110.

In an energy storage mode, heat energy may be transferred from the relatively high-temperature working fluid 220, flowing from the high-temperature energy source 510 to the low-temperature energy source 520 through the heat transfer pipe 120, to the heat storage medium 210 in the heat storage medium tank 110, or the heating device at the heat transfer pipe 120 may be heated by power applied from the outside to thus transfer the heat energy to the heat storage medium 210 in the heat storage medium tank 110.

In an energy recovery mode, heat energy may be transferred from the heat storage medium 210 in the heat storage medium tank 110 to the relatively low-temperature working fluid 220 flowing from the low-temperature energy source 520 to the high-temperature energy source 510 through the heat transfer pipe 120.

The at least one device 100 may be disposed between the high-temperature energy source 510 and the low-temperature energy source 520.

The at least one heat transfer pipe 120 may be disposed in the one heat storage medium tank 110.

The device 100 may further include at least one connection pipe 130 communicating the plurality of heat transfer pipes 120 to each other when the plurality of devices 100 are disposed between the high-temperature energy source 510 and the low-temperature energy source 520, or the plurality of heat transfer pipes 120 are disposed in the one heat storage medium tank 110.

In an energy storage mode, in each of the heat transfer pipes 120, at least one selected from the high-temperature working fluid 220 or electric heating may be appropriately selected to transfer the heat energy to the heat storage medium 210 independently of each other when the plurality of devices 100 are disposed between the high-temperature energy source 510 and the low-temperature energy source 520, or the plurality of heat transfer pipes 120 are disposed in the one heat storage medium tank 110.

At least one isolation wall 111 may be formed in the heat storage medium tank 110 to isolate and separate spaces where the respective heat transfer pipes 120 are disposed when the plurality of heat transfer pipes 120 are disposed in the one heat storage medium tank 110. Here, at least one through hole 112 may be formed in the isolation wall 111 to allow a fluid movement between the adjacent spaces isolated and separated from each other.

The device 100 may include a gas discharge pipe 140 for discharging non-reactive gas through at least one gas discharge port 141 disposed at a lower portion of the heat storage medium tank 110 and disposed toward the heat transfer pipe 120. In addition, the device 100 may include a particle remover 142 removing a particle of the heat storage medium that is accompanied by a droplet from the gas discharged from the gas discharge pipe 140.

The device 100 may include: a re-circulation compressor 145 compressing and forcibly blowing gas discharged from the heat storage medium tank 110 and re-circulating the gas; and a gas storage tank 146 storing surplus gas other than the gas re-circulated to the gas discharge pipe 140 among the gas blown by the re-circulation compressor 145, or discharging a portion of the stored gas to supplement the gas re-circulated to the gas discharge pipe 140.

The device 100 may include a salt droplet remover disposed in front of the re-circulation compressor 145 and removing a salt droplet included in the gas, wherein the salt droplet remover removes the salt droplet by cooling and solidifying the salt droplet using a coolant, and the salt droplet remover is an internal salt droplet remover 143 disposed inside the heat storage medium tank 110, or is an external salt droplet remover 144 disposed in a gas circulation flow path outside the heat storage medium tank 110.

The device 100 may include: a pump 151 disposed in the heat storage medium tank 110 and sending a portion of the heat storage medium 210 to another portion; or a stirrer 152 disposed in the heat storage medium tank 110 and forming a flow in the heat storage medium 210, to cause the forced flow of the heat storage medium 210 in the heat storage medium tank 110.

The heat storage medium tank 110 may be sealed and insulated to be isolated from the outside.

The heat storage medium tank 110 may be insulated from the heat transfer pipe 120. Here, the heat storage medium tank 110 may be made of an insulating material, or made of a conductive material and an electrical cutoff part 113 or an electrical cutoff flange 114 is disposed at a connection portion with the heat transfer pipe 120.

The heat transfer pipe 120 may include a power inlet 122a and a power outlet 122b, through which the power passes, and an electrical cutoff joint 123 insulating another portion of the heat transfer pipe 120 from its portion to which the power is applied through the power inlet 122a or the power outlet 122b.

The heat transfer pipe 120 may include a shutoff valve 126 disposed at the working fluid distribution port 121, and a sealing part of the shutoff valve 126 may serve as the electrical cutoff joint 123.

In the heat transfer pipe 120, the power inlet 122a and the power outlet 122b may be formed outside the heat storage medium tank 110, or the power inlet 122a and the power outlet 122b may be formed below a water level of the heat storage medium 210 accommodated in the heat storage medium tank 110.

The heat transfer pipe 120 may be made of a material that generates heat when the power is applied thereto, and the power inlet 122a and the power outlet 122b may be directly connected to the heat transfer pipe 120. The heat transfer pipe 120 may have a plurality of regions having different electrical resistances.

The heat transfer pipe 120 may have a separate heating line 124 wound around an outer surface and insulated from the outside, and the power inlet 122a and the power outlet 122b may be connected to the heating line 124.

The heat transfer pipe 120 may partially have a direct heating part A made of a material that generates heat when the power is applied thereto, and partially have an indirect heating part B provided with a separate heating line 124 wound around an outer surface of the heat transfer pipe 120 and insulated from the outside, the direct heating part A and the indirect heating part B being connected in series to each other.

The heat transfer pipe 120 may have a meandering flow path shape to have an increased contact area with the heat storage medium 210.

The heat transfer pipe 120 may extend or be curved to have a relatively large contact area with the heat storage medium 210 at the lower portion of the heat storage medium tank 110.

The heat transfer pipe 120 may include a heat dissipation fin 125 disposed on an outer surface to have an increased contact area with the heat storage medium 210.

A pipe system 300 connected to each of the heat transfer pipes 120 and adjusting the distribution of the working fluid 220 may be disposed when the plurality of devices 100 are disposed between the high-temperature energy source 510 and the low-temperature energy source 520.

The pipe system 300 may include a high temperature header 310 connected to the high-temperature energy source 510 to thus distribute the relatively high-temperature working fluid 220, a plurality of high temperature pipes 315 connecting the high temperature header 310 to the heat transfer pipe 120 disposed on each of the plurality of electrical and high-temperature energy storage devices 100, at least one high temperature header valve 310v disposed on the high temperature header 310 and between the plurality of high temperature pipes 315, a high temperature pipe valve 315v disposed on the high temperature pipe 315, a low temperature header 320 connected to the low-temperature energy source 520 to thus distribute the relatively low-temperature working fluid 220, a plurality of low temperature pipes 325 connecting the low temperature header 320 to the heat transfer pipe 120 disposed on each of the plurality of electrical and high-temperature energy storage devices 100, at least one low temperature header valve 320v disposed on the low temperature header 320 and between the plurality of low temperature pipes 325, and a low temperature pipe valve 325v disposed on the low temperature pipe 325.

In another general aspect, provided is an energy storage and recovery system 400 which includes an electrical and high-temperature energy storage device 100, and in which a heat storage medium tank 110 extends horizontally, a temperature gradient of the heat storage medium 210 from a low temperature to a high temperature is formed from one side of the heat storage medium tank 110 to the other side, and a steam generation region, a reheated region, and an overheated region are sequentially formed from the low temperature side to the high temperature side, the system including: a condenser 410 condensing and discharging a working fluid 220; a low-temperature condensate pump 420 pumping the relatively low-temperature working fluid 220 discharged from the condenser 410; a deaerator 430 separating gas/liquid from the relatively low-temperature working fluid 220 discharged from the low-temperature condensate pump 420; a high-temperature condensate pump 440 pumping the relatively high-temperature working fluid 220 discharged from the deaerator 430; a steam generation region-heat transfer pipe 120g disposed in the steam generation region, and allowing the working fluid 220 discharged from the high-temperature condensate pump 440 to evaporate while passing through the steam generation region-heat transfer pipe 120g; a steam storage part 450 storing steam of the working fluid 220 discharged from the steam generation region-heat transfer pipe 120g; an overheated region-heat transfer pipe 120s disposed in the overheated region, and allowing the working fluid 220 discharged from the steam storage part 450 to be overheated while passing through the overheated region-heat transfer pipe 120s; a high-temperature turbine 460 rotated by the relatively high-temperature working fluid 220 discharged from the overheated region-heat transfer pipe 120s; a reheated region-heat transfer pipe 120r disposed in the reheated region, and allowing the working fluid 220 discharged from the high-temperature turbine 460 to be reheated while passing through the reheated region-heat transfer pipe 120r; and a low-temperature turbine 470 rotated by the relatively low-temperature working fluid 220 discharged from the reheated region-heat transfer pipe 120r, wherein the working fluid 220 discharged from the low-temperature turbine 470 flows in the condenser 410 to thus be circulated.

The present invention may have a great effect of being able to store both the high-temperature energy and the electrical energy without any separate conversion device. In addition, the present invention may also store the low-quality electrical energy, and enable the local heating using the electrical energy, thus also smoothly storing the electrical energy having the highly fluctuating amount. In addition, the present invention may produce the high-quality electrical energy regardless of the quality of the inflowing energy.

In addition, the present invention may use water or air as the working fluid, thereby fundamentally eliminating the problems such as the difficulty in its operation and management to maintain the working fluid to be in the molten state when the working fluid is molten salt. In addition, the present invention may select any of the various heat storage media, and thus also use the latent heat of the heat storage medium. In addition, the present invention may be electrically safe because the heat storage medium acts as the electrical cutoff.

In addition, the device itself has the simple structure, and accordingly, the present invention may not only have the improved manufacturing ease and economic feasibility, but also enable the simple large-capacity using the module concept.

### [Description of Drawings]

FIG. 1 shows an electrical and high-temperature energy storage device according to the present invention.
FIG. 2 shows an energy storage mode of the electrical and high-temperature energy storage device according to the present invention by high-temperature energy.
FIG. 3 shows an energy storage mode of the electrical and high-temperature energy storage device according to the present invention by electrical energy.
FIG. 4 shows an energy recovery mode of the electrical and high-temperature energy storage device according to the present invention.
FIGS. 5 and 6 show multiple-arrangement embodiments of the electrical and high-temperature energy storage device according to the present invention.
FIGS. 7 to 10 show additional configuration embodiments of the electrical and high-temperature energy storage device according to the present invention.
FIG. 11 shows a first embodiment of a heat exchange medium tank of the electrical and high-temperature energy storage device according to the present invention.
FIG. 12 shows a second embodiment of the heat exchange medium tank of the electrical and high-temperature energy storage device according to the present invention.
FIG. 13 shows a third embodiment of the heat exchange medium tank of the electrical and high-temperature energy storage device according to the present invention.
FIG. 14 shows a first embodiment of a heat transfer pipe of the electrical and high-temperature energy storage device according to the present invention.
FIG. 15 shows a second embodiment of the heat transfer pipe of the electrical and high-temperature energy storage device according to the present invention.
FIG. 16 shows a third embodiment of the heat transfer pipe of the electrical and high-temperature energy storage device according to the present invention.
FIG. 17 shows a fourth embodiment of the heat transfer pipe of the electrical and high-temperature energy storage device according to the present invention.
FIG. 18 shows a fifth embodiment of the heat transfer pipe of the electrical and high-temperature energy storage device according to the present invention.
FIG. 19 shows a sixth embodiment of the heat transfer pipe of the electrical and high-temperature energy storage device according to the present invention.
FIG. 20 shows a seventh embodiment of the heat transfer pipe of the electrical and high-temperature energy storage device according to the present invention.
FIG. 21 shows an eighth embodiment of the heat transfer pipe of the electrical and high-temperature energy storage device according to the present invention.
FIG. 22 shows a ninth embodiment of the heat transfer pipe of the electrical and high-temperature energy storage device according to the present invention.
FIG. 23 shows electrical resistances of various materials.
FIG. 24 shows a graph of electrical conductivities based on temperatures of the various materials.
FIG. 25 shows a graph of strengths based on the temperatures of the various materials.
FIG. 26 shows a first embodiment of large-capacity use of the electrical and high-temperature energy storage device according to the present invention.
FIG. 27 shows a second embodiment of the large-capacity use of the electrical and high-temperature energy storage device according to the present invention.
FIG. 28 shows an embodiment of a process using the electrical and high-temperature energy storage device according to the present invention.

### **Description of Reference Numerals**

100: electrical and high-temperature energy storage device
110: heat storage medium tank
111: isolation wall
112: through hole
113: electrical cutoff part
114: electrical cutoff flange
120: heat transfer pipe
121: working fluid distribution port
122a: power inlet
122b: power outlet
123: electrical cutoff joint
124: heating line
125: heat dissipation fin
130: connection pipe
140: gas discharge pipe
141: gas discharge port
142: particle remover
143: internal salt droplet remover
144: external salt droplet remover
145: re-circulation compressor
146: gas storage tank
210: heat storage medium
220: working fluid
300: pipe system
310: high temperature header
310v: high temperature header valve
315: high temperature pipe
315v: high temperature pipe valve
320: low temperature header
320v: low temperature header valve
325: low temperature pipe
325v: low temperature pipe valve
400: energy storage and recovery system
410: condenser
420: low-temperature condensate pump
   430: deaerator
   440: high-temperature condensate pump
   450: steam storage part
   460: high-temperature turbine
   470: low-temperature turbine
   120g: steam generation region-heat transfer pipe
   120s: overheated region-heat transfer pipe
   120r: reheated region-heat transfer pipe
   510: high-temperature energy source
   520: low-temperature energy source

### [Best Mode]

Hereinafter, an electrical and high-temperature energy storage device according to the present invention configured as described above is described in detail with reference to the attached drawing.

### [1] Basic Configuration and Operation Principle of the Electrical and High-Temperature Energy Storage Device According to the Present Invention

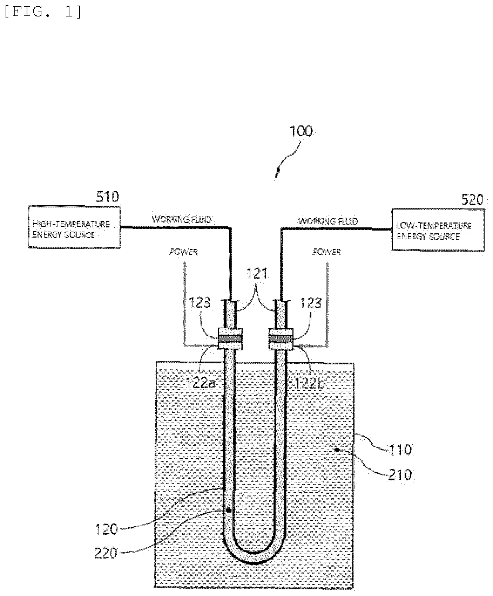

FIG. 1 shows an electrical and high-temperature energy storage device according to the present invention. As shown in FIG. 1, an electrical and high-temperature energy storage device 100 of the present invention may include a heat storage medium tank 110 which accommodates a heat storage medium 210, and a heat transfer pipe 120 through which a working fluid 220 is distributed.

The heat storage medium tank 110 may serve to accommodate the heat storage medium 210 which may store heat. The heat storage medium 210 may be a material storing heat energy in the form of sensible or latent heat, and may be a solid, a liquid, or a phase change material. When the heat storage medium 210 is the solid, the medium 210 may be, for example, concrete, metal, or solid salt. Alternatively, when the heat storage medium 210 is the liquid, the medium 210 may be, for example, natural oil, synthetic oil, or molten salt. Alternatively, when the heat storage medium 210 is the phase change material, the medium 210 may be, for example, solid salt, molten salt, or metal. As may be seen from these examples, the heat storage medium 210 may reach hundreds of degrees Celsius depending on the material. Accordingly, the medium 210 may not be operated smoothly when its temperature or like is changed due to an influence of an external environment. To prevent this problem, it is preferable that the heat storage medium tank 110 is sealed and insulated to be isolated from the outside (this specific configuration is described in more detail in paragraph [2] below).

The heat transfer pipe 120 may also include a heating device heated by power applied from the outside in addition to its function of distributing the working fluid 220 as described above. In more detail, the heat transfer pipe 120 may have a pipe shape, and be used to distribute the working fluid 220 through a working fluid distribution port 121 disposed at each of two ends. Here, a high-temperature energy source 510 providing a relatively high temperature environment and a low-temperature energy source 520 providing a relatively low temperature environment may respectively be connected to two ends of the heat transfer pipe 120. That is, the working fluid 220 distributed in the heat transfer pipe 120 may ultimately serve to move energy between the high-temperature energy source 510 and the low-temperature energy source 520.

Meanwhile, the heat transfer pipe 120 may have a portion accommodated in the heat storage medium tank 110, and accordingly, the working fluid 220 in this portion of the heat transfer pipe 120 may exchange heat with the heat storage medium 210 in the heat storage medium tank 110. In addition, the heating device heated by electric power may be at least partially disposed at the portion of the heat transfer pipe 120 that is accommodated in the heat storage medium tank 110.

An operation principle of the electrical and high-temperature energy storage device 100 configured in this way is described in more detail.

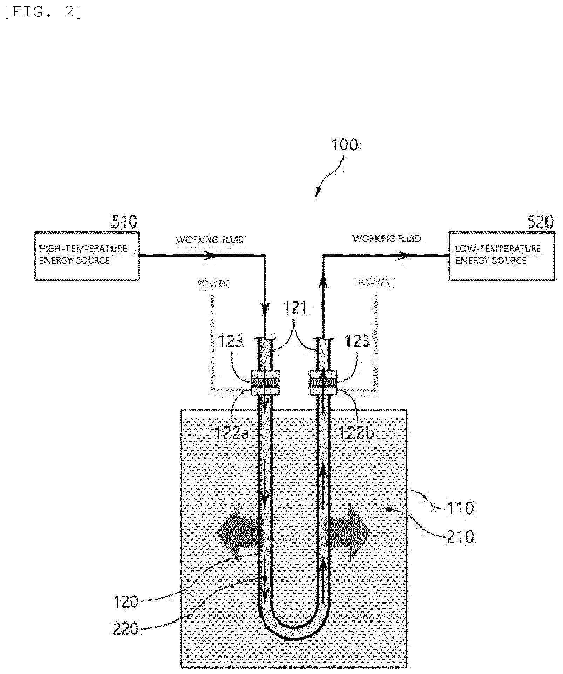

FIG. 2 shows an energy storage mode operation of the electrical and high-temperature energy storage device according to the present invention by high-temperature energy. As shown in the drawing, in the energy storage mode, the relatively high-temperature working fluid 220 may flow from the high-temperature energy source 510 to the low-temperature energy source 520 through the heat transfer pipe 120. The heat energy may then be transferred from the relatively high-temperature working fluid 220 to the heat storage medium 210 in the heat storage medium tank 110, and the heat energy may be stored in the heat storage medium 210.

Here, the high-temperature energy source 510 may be, for example, a portion where the heat energy is acquired by directly receiving solar heat, and collectively refer to energy sources providing the relatively high temperature environment, such as a boiler providing high temperature steam. The boiler is an example of the high-temperature energy source 510 from an energy storage perspective, and to the contrary, a steam turbine or a gas expander may be an example of the high-temperature energy source 510 from an energy recovery perspective. Meanwhile, the low-temperature energy source 520 may collectively refer to an energy source providing the relatively low temperature environment, such as a room temperature water tank or a condenser.

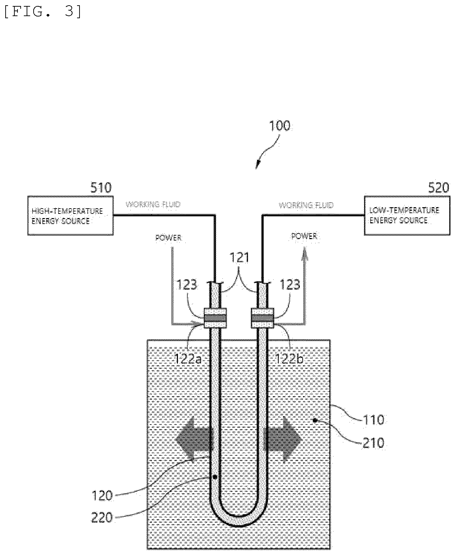

FIG. 3 shows an energy storage mode operation of the electrical and high-temperature energy storage device by the electrical energy according to the present invention. As shown in the drawing, in the energy storage mode, the heating device at the heat transfer pipe 120 may be heated by the power applied from the outside to thus transfer the heat energy to the heat storage medium 210 in the heat storage medium tank 110, and the heat energy may be stored in the heat storage medium 210.

When operated in this way, the device 100 may store the energy even without the high-temperature energy source 510. In particular, this way may be useful when collecting and storing the electrical energy from a power generation facility that generates irregular power, such as wind power generation, tidal power generation, or geothermal power generation.

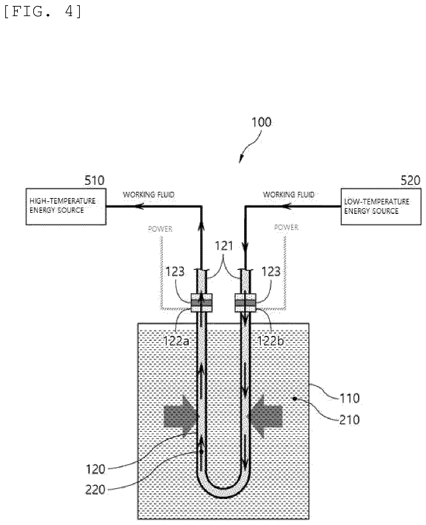

FIG. 4 shows an energy recovery mode operation of the electrical and high-temperature energy storage device according to the present invention. As shown in the drawing, in the energy recovery mode, contrary to the energy storage mode, the relatively low-temperature working fluid 220 may flow from the low-temperature energy source 520 to the high-temperature energy source 510 through the heat transfer pipe 120. The heat energy may then be transferred from the heat storage medium 210 in the heat storage medium tank 110 to the relatively low-temperature working fluid 220. The working fluid 220 may include the heat energy and then flow toward the high-temperature energy source 510. When the high-temperature energy source 510 is the steam turbine or the gas expander as described above, the energy may be converted and used through the power generation by using the heat energy transferred by the working fluid 220.

In this way, in the energy storage mode, the electrical and high-temperature energy storage device 100 of the present invention, may take the high temperature heat energy, such as solar heat, as it is by using the working fluid, and store heat in the form of the heat energy as it is in the heat storage medium, or convert the irregular electrical energy such as wind power to the heat energy by using the heating device at the heat transfer pipe and store the converted energy in the heat storage medium. An existing molten salt heat storage device (or molten salt energy storage system) may be designed to store only the heat energy acquired from the high-temperature energy source, thus allowing renewable energy generation to be mostly limited by a solar thermal method. Therefore, the existing device requires a separate device converting the electrical energy to the heat energy in order to be applied to a renewable energy power generation facility that generates the electrical energy such as solar energy or the wind power. However, the present invention may store both the high-temperature energy and the electrical energy as desired without any need to add the separate device or equipment.

In addition, the electrical and high-temperature energy storage device 100 according to the present invention may also smoothly store low-quality electrical energy by using the heating device at the heat transfer pipe as described above. There are existing methods of generating hydrogen or liquefying air to store surplus electrical energy in large quantities. However, these existing methods require continuous supply of high-quality electrical energy. For example, when generating hydrogen, it is necessary to supply the high-quality electrical energy to a water electrolysis device and a cryogenic hydrogen liquefaction device, and maintain a fairly high level of load for safety and economic feasibility. When the low-quality electrical energy is supplied to the device, it may cause problems in the water electrolysis device and a hydrogen liquefaction device. If the electrical energy is not continuously supplied to the device, problems such as frequent start-up and shutdown operations, pre-cooling, and residual gas disposal may occur. On the other hand, the electrical and high-temperature energy storage device 100 according to the present invention may simply convert the electrical energy to the heat energy. Therefore, the device 100 has no problem even if the current or voltage of the electrical energy is not constant, and has no problem with heat energy storage even if the supply is discontinuous, which is a feature of renewable energy. The fact that the device 100 may store the discontinuous electrical energy may be a very important advantage as a large-scale energy device for the renewable energy.

In addition, the electrical and high-temperature energy storage device 100 according to the present invention may enable local heating using the electrical energy. When the inflowing electrical energy is small, the device 100 may heat a portion of the heat transfer pipe, and move heat to another portion by using the working fluid. In other words, the device 100 has no major problems with the energy storage, even if a power supply amount is rapidly changed. The fact that the device 100 may store the electrical energy having such a highly fluctuating amount may also be a very important advantage as the large-scale energy device for renewable energy.

In addition, the electrical and high-temperature energy storage device 100 according to the present invention may produce the high-quality electrical energy regardless of a quality of the inflowing electrical energy. As described above, in the energy recovery mode, the device 100 according to the present invention may use the working fluid to thus move the heat energy stored in the heat storage medium toward the high-temperature energy source, and produce the high-quality electrical energy by simply rotating the turbine when the high-temperature energy source is the device such as the steam turbine. That is, the device 100 may produce very high-quality electrical energy even when the low-quality electrical energy flows therein. In summary, the device 100 according to the present invention may store the corresponding energy as the heat energy even when receiving irregular electrical energy, produce, from this heat energy, the high-temperature and high-pressure working fluid (steam or high-temperature air) having a stable quality at a stable flow rate, and produce the high-quality electrical energy by using this high-quality working fluid.

In addition, the electrical and high-temperature energy storage device 100 according to the present invention may be operated based on the principle as described above, and thus much more freely select a material of the working fluid than an existing device. The device 100 according to the present invention may select water or air as its working fluid, and it is very convenient for its operation when selecting this material as the working fluid. The existing molten salt heat storage device may use molten salt as the working fluid, and the fluid may thus always be required to be maintained in a molten state. For example, if pipe insulation is poor, molten salt may become a solid and cause the pipe to become clogged. Therefore, extreme care is required to ensure that an entire system is maintained to a melting point of salt or above. On the other hand, the device 100 according to the present invention may use water or air as the working fluid, and is thus completely free from this problem. For example, if the pipe insulation is poor, only a slight energy loss may occur in the present invention.

The electrical and high-temperature energy storage device 100 according to the present invention may also have a high degree of freedom in selecting a material of the heat storage medium. That is, the device 100 according to the present invention may use any of various heat storage media, and also use latent heat. The heat storage medium in the present invention may be stored in a storage tank and may not be moved, and thus use any of the liquid, the solid, and the phase change material. For example, even when using salt, the heat storage medium may be in any of a liquid (molten) state or a solid state, or go back and forth between these two states. The existing molten salt heat storage device may only use sensible heat in the molten state. However, the device 100 according to the present invention may also use liquid-solid latent heat, thus achieving a size reduced by almost half.

In addition, the device 100 according to the present invention may be electrically safe because the heat storage medium acts as electrical cutoff. The device 100 according to the present invention may use a large amount of electrical energy, and the electrical safety may thus be very important. Essentially, the heat storage medium (e.g., concrete, oil, or salt) is a very strong electrical monolith, and accordingly, there is no possibility of short circuit from the heat transfer pipe to the heat storage medium, thus making the device 100 very safe. The device 100 may be electrically very safe as long as the power inlet or outlet of the heat transfer pipe is properly constructed.

In addition, (as is described in more detail below), the device according to the present invention may enable simple large-capacity use using a module concept. When modularizing an insulation pipe/the heat storage medium/a power supply device, the device 100 may enable the large-capacity use by increasing the number of modules. This method is very important in a large-scale energy storage method. A hydrogen generation method or an air liquefaction method is unable to achieve such simple large-capacity use using this module concept. In order to enable large-capacity use, it is necessary to design/manufacture/operate large-capacity facilities, and a risk is thus very high for achieving the large-capacity use. However, the device 100 according to the present invention may fundamentally eliminate all these limitations, thus very easily implementing the large-capacity use.

Hereinafter, the description describes the configuration related to the large-capacity use of the electrical and high-temperature energy storage device 100 according to the present invention and other additional configurations.

As shown in FIGS. 1 to 4, in the electrical and high-temperature energy storage device 100 according to the present invention, one device 100 may be disposed between the high-temperature energy source 510 and the low-temperature energy source 520, or one heat transfer pipe 120 may be disposed in one heat storage medium tank 110. However, the present invention is not limited thereto, and in the electrical and high-temperature energy storage device 100 according to the present invention, the plurality of devices 100 may be disposed between the high-temperature energy source 510 and the low-temperature energy source 520, and the plurality of heat transfer pipes 120 may be disposed in one heat storage medium tank 110.

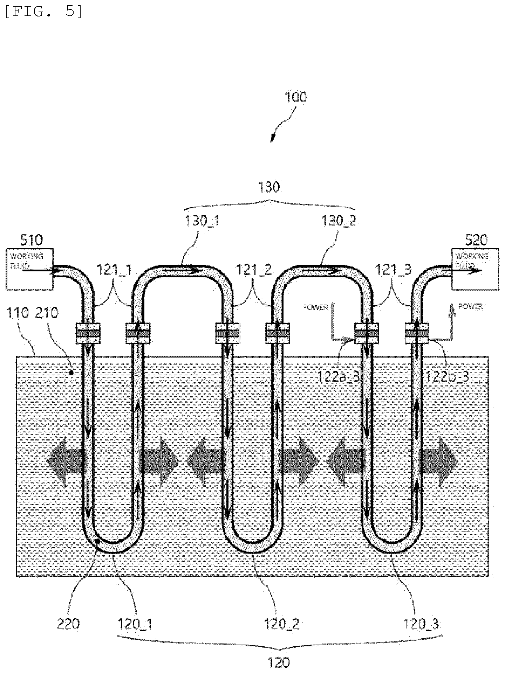

As shown in FIG. 5, the electrical and high-temperature energy storage device 100 may include at least one connection pipe 130 communicating the plurality of heat transfer pipes 120 to each other when the plurality of devices 100 are disposed between the high-temperature energy source 510 and the low-temperature energy source 520, or the plurality of heat transfer pipes 120 are disposed in one heat storage medium tank 110, as described above. As shown in FIG. 5, three pipes, i.e., first, second, and third heat transfer pipes 120_1, 120_2, and 120_3, may be disposed in one heat storage medium tank 110. The working fluid distribution port on one side of the first heat transfer pipe 120_1 may be connected to the high-temperature energy source 510, the working fluid distribution port on the other side of the third heat transfer pipe 120_3 may be connected to the low-temperature energy source 520, and the other working fluid distribution ports may thus be used to connect each other. As shown in FIG. 5, the first and second heat transfer pipes 120_1 and 120_2 may be connected to each other through a first connection pipe 130_1, and the second and third heat transfer pipes 120_2 and 120_3 may be connected to each other through a second connection pipe 130_2. In this way, the first, second, and third heat transfer pipes 120_1, 120_2, and 120_3 may be connected in series to each other. As a result, the working fluid 220 flowing from the high-temperature energy source 510 on one side may smoothly flow to the low-temperature energy source 520 on the other side, and may exchange heat with the heat storage medium 210.

Meanwhile, FIG. 5 shows its operation in the energy storage mode. As shown in FIG. 5, it may be seen that the high-temperature working fluid 220 directly transfers the heat energy to the heat storage medium 210 in the first and second heat transfer pipes 120_1 and 120_2, as well as power is applied to a power inlet/outlet 122a_3 or 122b_3 of the third heat transfer pipe 120_3 and the heat energy is thus transferred to the heat storage medium 210 by electric heating. That is, in the energy storage mode, in each of the heat transfer pipes 120, at least one selected from the high-temperature working fluid 220 or the electric heating may be appropriately selected to transfer the heat energy to the heat storage medium 210 independently of each other when the plurality of devices 100 are disposed between the high-temperature energy source 510 and the low-temperature energy source 520, or the plurality of heat transfer pipes 120 are disposed in one heat storage medium tank 110.

As shown in FIG. 5, for example, if the high-temperature energy source 510 is a solar power generator, the working fluid 220 may absorb a very large amount of heat energy from the high-temperature energy source 510 to thus have a significantly high temperature. The high-temperature working fluid 220 may transfer the heat energy to the heat storage medium 210 in a process of passing through the first and second heat transfer pipes 120_1 and 120_2, thus allowing the heat energy to be stored in the heat storage medium 210, and the working fluid 220 itself may have a gradually decreased temperature. Therefore, at a time point when passing through the third heat transfer pipe 120_3, the working fluid 220 may have the significantly decreased temperature. Accordingly, it is apparent that storage performance of the heat energy using the heat transfer in the third heat transfer pipe 120_3 is significantly reduced. Here, power coming from a wind generator may be connected to the third heat transfer pipe 120_3. In this case, the working fluid 220 in the third heat transfer pipe 120_3 may not already have much energy to transfer to the heat storage medium 210. Therefore, also from the energy storage perspective, the working fluid 220 may flow directly to the low-temperature energy source 520 without any significant energy loss, and instead, the third heat transfer pipe 120_3 mainly function to convert the electrical energy to the heat energy and store the converted energy. In this way, all the energy acquired from the solar and wind power generation may be stored with high efficiency even using one electrical and high-temperature energy storage device 100.

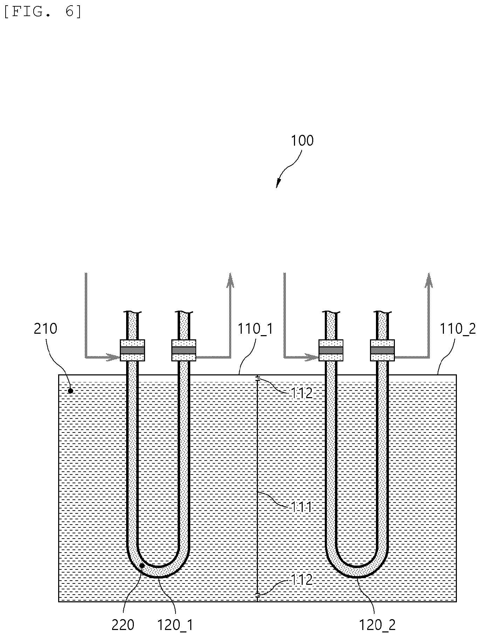

FIG. 6 shows another multiple-arrangement embodiment of the electrical and high-temperature energy storage device according to the present invention. As shown in FIG. 6, at least one isolation wall 111 may be formed in the heat storage medium tank 110 to isolate and separate spaces where the respective heat transfer pipes 120 are disposed when the plurality of heat transfer pipes 120 are disposed in one heat storage medium tank 110. FIG. 6 exemplifies that the first and second heat transfer pipes 120_1 and 120_2 are disposed in one heat storage medium tank 110, and one isolation wall 111 is formed therebetween.

When the heat storage medium 210 is a fluid, if the isolation wall 111 is not present, the fluid may be moved naturally and an overall temperature distribution may become approximately uniform in a long term. However, it may be necessary to intentionally form a temperature gradient depending on a region when needed. In this case, the temperature gradient may be implemented more smoothly by limiting a movement of the fluid by using the isolation wall 111. While an appropriate temperature gradient is formed in this way, the heat transfer pipes may be disposed in each temperature region and appropriate devices may be connected thereto, thereby significantly increasing overall system thermal efficiency (its specific configuration is described in more detail in paragraph [3] below).

Meanwhile, the isolation wall 111 may be formed in this way to thus cause a temperature difference between the separated spaces, thereby making a different pressure or water level in each space, which may pose a risk of adversely affecting structural stability. In order to prevent this problem, it is preferable that at least one through hole 112 is formed in the isolation wall 111 to allow the fluid movement between the adjacent spaces isolated and separated from each other. FIG. 5 shows the liquid-phase heat storage medium 210 as an example. The through hole 112 formed in an upper portion of the isolation wall 111 may adjust the pressure by allowing a movement of gas filling an empty space at the top of the heat storage medium 210, and the through hole 112 formed in a lower portion of the isolation wall 111 may adjust the water level by allowing a movement of the liquid-phase heat storage medium 210.

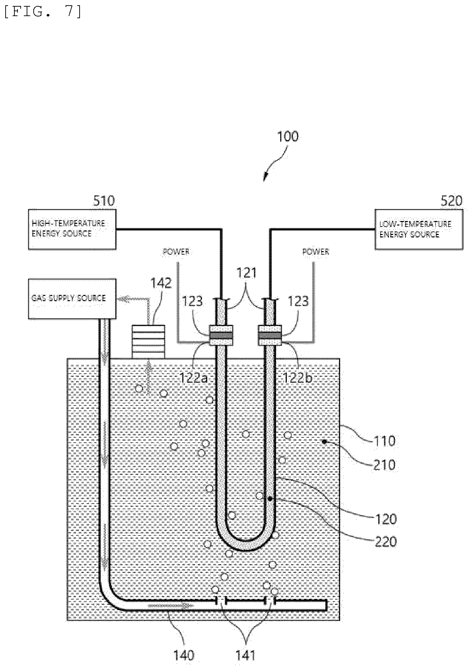

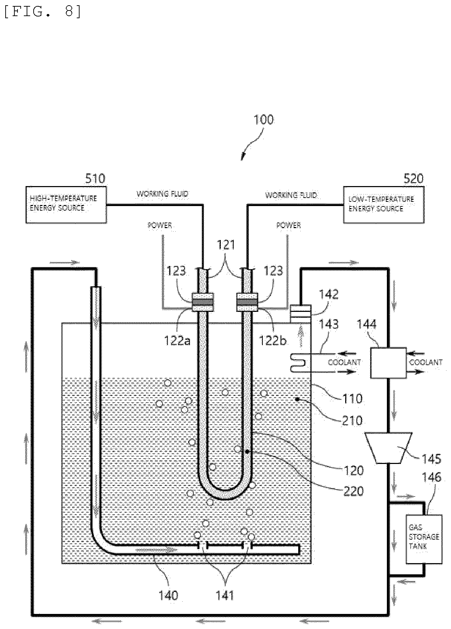

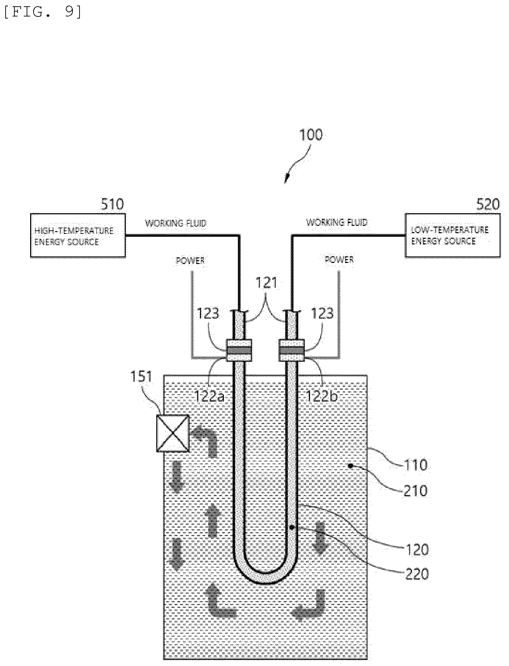

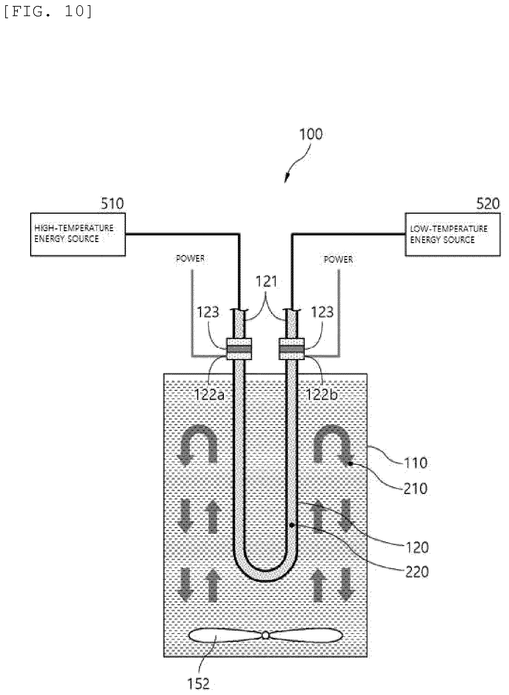

FIGS. 7 to 10 show additional configuration embodiments of the electrical and high-temperature energy storage device according to the present invention, which are intended to improve the heat transfer by forming a forced flow in the heat storage medium 210. In the embodiments of FIGS. 7 and 8, the forced flow may be generated using gas ejection, and in the embodiments of FIGS. 9 and 10, the forced flow may be generated directly using a separate device. In all cases, it is preferable that the heat storage medium 210 is liquid.

In the embodiment of FIG. 7, the electrical and high-temperature energy storage device 100 may include a gas discharge pipe 140 for discharging non-reactive gas through at least one gas discharge port 141 disposed at a lower portion of the heat storage medium tank 110 and disposed toward the heat transfer pipe 120.

The heat storage medium 210 may absorb the heat energy around the heat transfer pipe 120, a side of the heat storage medium 210 that is closer to the heat transfer pipe 120 may have a high temperature, and a side farther away from the heat transfer pipe 120 may have a low temperature. When the heat storage medium 210 is the liquid, the fluid movement may be generated naturally due to convection, and the gas may be discharged from the gas discharge pipe 140, thus making this fluid movement more active. The gas discharged from the gas discharge pipe 140 may be collected at an upper portion of the heat storage medium tank 110, and the collected gas may be recovered, transferred to a gas supply source, and then circulated, thereby achieving smooth gas supply. Here, if the gas flow rate is too high, there is a risk that a particle of the heat storage medium 210 may be accompanied by a droplet and recovered together with the droplet during a gas recovery process to thus accumulated in the gas supply source. To prevent this problem, it is preferable that when including the gas discharge pipe 140, the electrical and high-temperature energy storage device 100 also includes a particle remover 142 removing the particle of the heat storage medium that is accompanied by the droplet from the gas discharged therefrom.

Here, there is a risk of reducing system efficiency or durability when the gas reacts with the heat storage medium 210 or the heat transfer pipe 120, thus causing corrosion or deformation. Therefore, the gas may be non-reactive with the material of the heat storage medium 210, the heat transfer pipe 120, or the like. Gas reactivity may be determined by the chemical and physical features of the heat storage medium and the discharged gas, and it is thus necessary to select the gas in consideration of this fact. For example, a nitrate-based gas may not have much reactivity with air, whereas a chloride-based gas may exhibit high corrosivity with oxygen in air. The gas may use nitrogen, air, steam, or the like in consideration of these various factors.

The embodiment of FIG. 8 exemplifies that the heat storage medium 210 flows also using the gas discharge pipe 140, while several additional configurations are added for a smoother gas flow. In other words, it may be said that the embodiment of FIG. 8 represents a specific and detailed example of "the gas supply source" part in the embodiment of FIG. 7. To describe sequentially based on the gas flow from the heat storage medium tank 110, the device 100 may first include a re-circulation compressor 145 compressing and forcibly blowing the gas discharged from the heat storage medium tank 110 and re-circulating the gas, and include a gas storage tank 146 storing surplus gas other than the gas re-circulated to the gas discharge pipe 140 among the gas blown by the re-circulation compressor 145, or discharging a portion of the stored gas to supplement the gas re-circulated to the gas discharge pipe 140.

Here, the re-circulated gas may have a salt droplet accompanied by the droplet, and the salt droplet is required to be removed before the gas flows in the re-circulation compressor 145. To this end, it is preferable that the electrical and high-temperature energy storage device 100 includes a salt droplet remover disposed in front of the re-circulation compressor 145 and removing the salt droplet included in the gas. The salt droplet remover may remove the salt droplet by cooling and solidifying the salt droplet using a coolant, and thus only needs to be disposed in front of the re-circulation compressor 145. Therefore, as shown in FIG. 8, the salt droplet remover may be an internal salt droplet remover 143 disposed inside the heat storage medium tank 110, or may be an external salt droplet remover 144 disposed in a gas circulation flow path outside the heat storage medium tank 110. The internal salt droplet remover 143 may simply be formed as a pipe for distributing the coolant, and the external salt droplet remover 144 may be formed as a heterogeneous fluid heat exchanger allowing heterogeneous (two types) fluids therein to be distributed independently of each other and exchange heat with each other.

In the embodiment of FIGS. 9 and 10, the forced distribution may be generated directly in the heat storage medium 210 as described above. The embodiment of FIG. 9 uses a pump 151 disposed in the heat storage medium tank 110 and sending a portion of the heat storage medium 210 to another portion, and the embodiment of FIG. 10 uses a stirrer 152 disposed in the heat storage medium tank 110 and forming the flow in the heat storage medium 210. It is inferred that the stirrer 152 is practically more effective for the flow than the pump 151. As shown in the drawing, it is most preferable for the stirrer 152 to be disposed on a lower portion of the tank 110. However, if necessary, a modified embodiment such as disposing the stirrer 152 on a side of the tank is also possible.

Additionally, when the heat storage medium 210 is transparent, the medium 210 may not easily absorb radiant heat. In preparation for this case, a radiation absorbing material having a density similar to that of the heat storage medium 210 may be added to the medium 210. In this case, the heat storage medium 210 may be the liquid, and the radiation absorbing material may have the form of fine particles and float while being mixed in the heat storage medium 210. The radiation absorber and the heat storage medium 210 may not have the same density. However, in order to maintain a stable floating state, the radiation absorbing material may have a fine form of a slightly heavier material than the heat storage medium 210.

When such a density difference occurs, there is a risk that the radiation absorbing material eventually sinks to form a non-uniform distribution over a long period of time. However, when the heat storage medium 210 is the liquid, an overall temperature may not be completely uniform, and natural convection may thus be generated to some extent, thereby maintaining a state where the radiation absorbing material is floating rather than sinking to a certain degree of stability. In addition, the floating state of the radiation absorbing material may be maintained much more stably when using the gas ejection or applying the directly-generated forced flow to the heat storage medium 210 as described above.

### [2] Specific Configuration and Operation Principle of the Electrical and High-Temperature Energy Storage Device According to the Present Invention

Hereinafter, the description describes the specific configuration of each part of the electrical and high-temperature energy storage device of the present invention in more detail.

A more detailed description of the heat storage medium tank 110 is provided as follows.

The description above describes that the heat storage medium tank 110 needs to be sealed and insulated in order to be isolated from the outside. In addition, when realistically assuming that the heat storage medium 210 is molten salt, the heat storage medium tank 110 needs to further satisfy various conditions such as being stable, robust, and less reactive. It is preferable that the heat storage medium tank 110 basically uses, as its material, metal, concrete, or the like, which is commonly used in general robust tank facility, and uses stainless lining and carbon steel tank methods when further considering salt corrosion prevention.

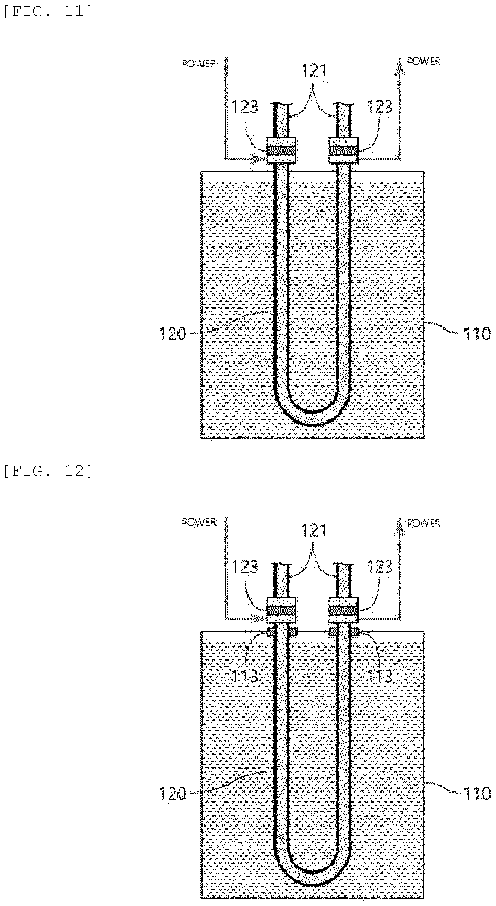

In addition, it is also required to prevent electricity leakage through the heat storage medium tank 110, and therefore, it is preferable that the heat storage medium tank 110 is insulated from the heat transfer pipe 120. Here, it is possible to naturally achieve this condition when the heat storage medium tank 110 is originally made of an insulating material such as concrete. FIG. 11 shows a first embodiment of a heat exchange medium tank of the electrical and high-temperature energy storage device according to the present invention, where the heat storage medium tank 110 is made of the insulating material. In this case, there is practically no need to form a separate electrical cutoff structure between the heat storage medium tank 110 and the heat transfer pipe 120.

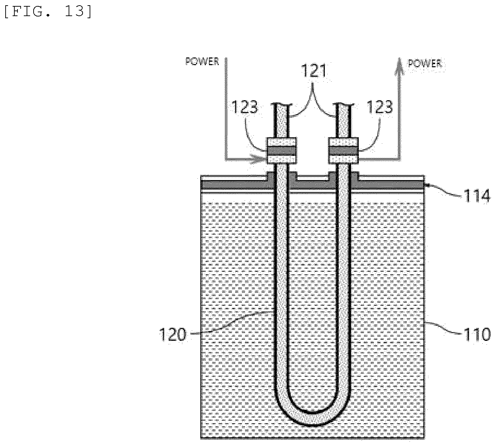

Meanwhile, when the heat storage medium tank 110 is made of a conductive material such as metal, if the heat storage medium tank 110 is configured in the way as shown in FIG. 11, there is a risk that the electricity passing through the heat transfer pipe 120 leaks into the heat storage medium tank 110. Therefore, in this case, as in the second embodiment of the heat exchange medium tank shown in FIG. 12, an electrical cutoff part 113 may preferably be disposed at a connection portion with the heat transfer pipe 120 in the heat storage medium tank 110. FIG. 12 exemplifies a case where the electrical cutoff part 113 is fixedly disposed during its manufacturing stage, and the electrical cutoff part 113 may need to be replaced during its actual operation. In order for a smoother part replacement, as in the third embodiment of the heat exchange medium tank in FIG. 13, a replaceable electrical cutoff flange 114 may be disposed in the heat storage medium tank 110.

The description describes the heat transfer pipe 120, first of all, a configuration related to the electrical energy transfer of the heat transfer pipe 120, in more detail as follows.

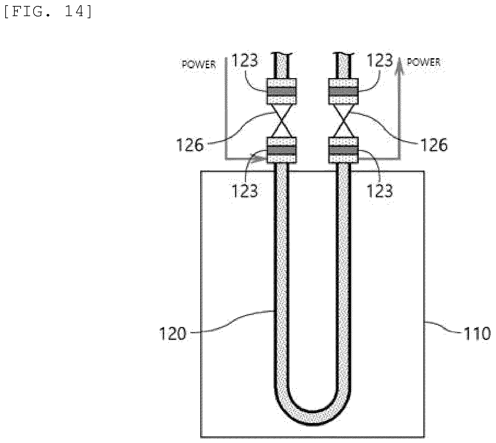

As described above, the heat transfer pipe 120 may include a power inlet 122a and a power outlet 122b, through which the power passes. Here, it is preferable that the heat transfer pipe 120 includes an electrical cutoff joint 123 insulating another portion of the heat transfer pipe 120 from its portion to which the power is applied through the power inlet 122a or the power outlet 122b in order to prevent the electricity leakage from occurring due to the electricity passing through to a portion of the heat transfer pipe 120 that is connected to the outside when the electricity passes directly through the pipe 120. FIG. 14 shows a first embodiment of the heat transfer pipe 120, and exemplifies that the heat transfer pipe 120 includes a shutoff valve 126 disposed at the working fluid distribution port 121 of the heat transfer pipe 120 and functioning to appropriately control the inflow and outflow of the working fluid into the working fluid, and a sealing part of the shutoff valve 126 serves as the electrical cutoff joint 123. In general, a valve may necessarily include a sealing part such as an O-ring to prevent fluid leakage. A material of this sealing part may be usually an elastic material such as rubber, and this material may generally have quite excellent electrical insulation performance. Therefore, it is possible to naturally implement the electrical insulation when disposing the shutoff valve 126.

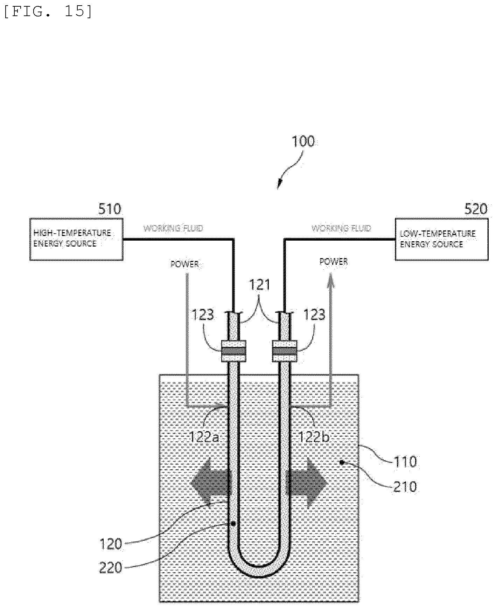

Meanwhile, as shown in several previous drawings, in the heat transfer pipe 120, the power inlet 122a and the power outlet 122b may be formed outside the heat storage medium tank 110 to thus make a work, such as the replacement, easier. However, the present invention is not limited thereto. FIG. 15 shows a second embodiment of the heat transfer pipe, and shows a case where the power inlet 122a and the power outlet 122b are formed below the water level of the heat storage medium 210 accommodated in the heat storage medium tank 110. A configuration such as the second embodiment of the heat transfer pipe may prevent overheating of its portion not in contact with the heat storage medium 210 although an operation such as the replacement may become rather inconvenient. Therefore, the configuration such as the second embodiment of the heat transfer pipe in FIG. 15 may be introduced in a case where there is a high need for the overheating prevention.

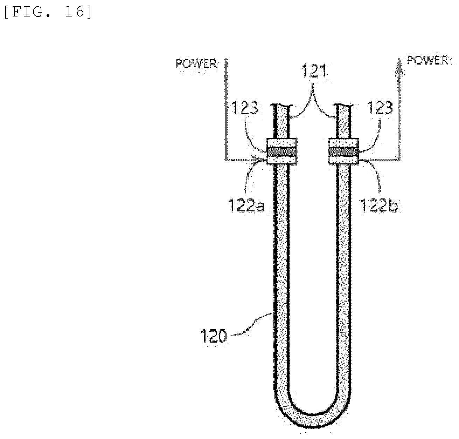

FIG. 16 shows a third embodiment of the heat transfer pipe of the electricity and high-temperature energy storage device according to the present invention, and the several previous drawings also show the application of this embodiment. In this case, the heat transfer pipe 120 may be made of a material that generates heat when the power is applied thereto, and the power inlet 122a and the power outlet 122b may be directly connected to the heat transfer pipe 120. In this case, a material that generates a lot of heat relative to the power applied thereto may be preferred, whereas there is a risk that the heat transfer pipe 120 itself may melt if an excessively high temperature occurs therein. It is thus necessary to carefully consider various aspects.

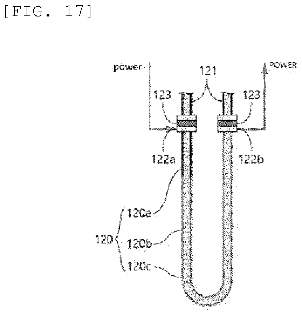

FIG. 17 shows a fourth embodiment of the heat transfer pipe of the electrical and high-temperature energy storage device according to the present invention. In this case, the heat transfer pipe 120 may have a plurality of regions having different electrical resistances. The fourth embodiment of the heat transfer pipe in FIG. 17 exemplifies that first, second, and third regions 120a, 120b, and 120c of the heat transfer pipe have the different electrical resistances. In this way, it is possible to adjust a heating degree of each region, thereby improving heat exchange efficiency. The easiest way to generate the different electrical resistance for each region may be to use a different material for each part. It is also possible to use various other methods of adjusting the electrical resistance, such as forming a different shape for each part.

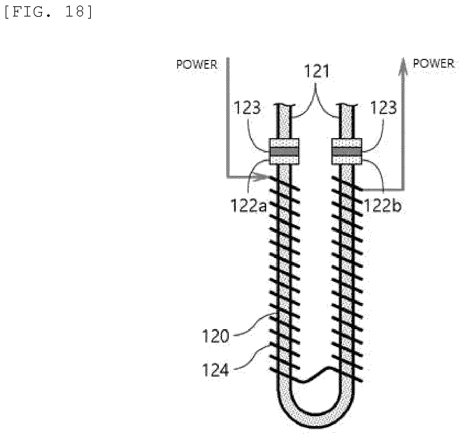

FIG. 18 shows a fifth embodiment of the heat transfer pipe of the electricity and high-temperature energy storage device according to the present invention. In this case, the heat transfer pipe 120 may have a separate heating line 124 wound around an outer surface and insulated from the outside. Therefore, the power inlet 122a and the power outlet 122b may be connected to the heating line 124 rather than the heat transfer pipe 120. That is, in this case, it may be seen that the heat transfer pipe 120 is formed by combining the heating line 124 in charge of the electric heating with a pipe part in charge of the working fluid distribution. It may be seen that in the previous examples, the heating is performed directly by the electricity passing through a body of the heat transfer pipe 120, that is, an electric heating part and the pipe part are integrated with each other. On the other hand, in the fifth embodiment of FIG. 18, the electric heating unit and the pipe unit are independently separated from each other. Therefore, the pipe part of the heat transfer pipe 120 may only be in charge of the distribution of the working fluid 220 and the heat transfer. Therefore, the pipe part may only need to have high thermal conductivity, and have no need to consider its physical property such as the electrical resistance or a heat generation amount relative to the power applied thereto, thus having a higher degree of freedom in selecting its material. However, in this case, in order to prevent the electricity leakage to the heat transfer pipe 120, the heating line 124 and the heat transfer pipe 120 are required to be electrically cut off from each other. To this end, an electrical cutoff sheath needs to be formed on the heating line 124.

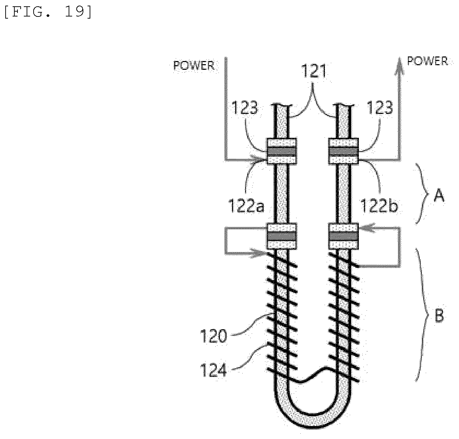

FIG. 19 shows a sixth embodiment of the heat transfer pipe of the electrical and high-temperature energy storage device according to the present invention, and shows a case where several methods described above are mixed to each other. In this case, the heat transfer pipe 120 may partially have a direct heating part A made of the material that generates heat when the power is applied thereto, and partially have an indirect heating part B provided with the separate heating line 124 wound around the outer surface of the heat transfer pipe 120 and insulated from the outside. The heat transfer pipe 120 needs to basically achieve its mechanical purpose of distributing the working fluid 220, and the direct heating part A and the indirect heating part B may thus be naturally connected in series to each other (the connection may here include not only mechanical connection but also electrical connection). The sixth embodiment of the heat transfer pipe in FIG. 19 shows that the direct heating part A, the indirect heating part B, and the direct heating part A) are then sequentially arranged (in a working fluid flow direction), and the present invention is not limited thereto. If necessary, variously modified embodiments are possible, such as first disposing the indirect heating part B.

The description describes the heat transfer pipe 120 and the configuration related to the high-temperature energy transfer of the heat transfer pipe 120, in more detail as follows.

As described above, the heat transfer pipe 120 may include the heating device generating heat as the power is applied thereto, thereby transferring the electrical energy to the heat storage medium 210, and the high-temperature working fluid 220 absorbing the high-temperature heat energy from the high-temperature energy source 510 may pass through the heat transfer pipe 120, thereby transferring the heat energy to the heat storage medium 210 by the heat transfer. Here, the higher the heat exchange efficiency, the better the heat storage performance. To this end, the heat transfer pipe 120 may have any of various shapes.

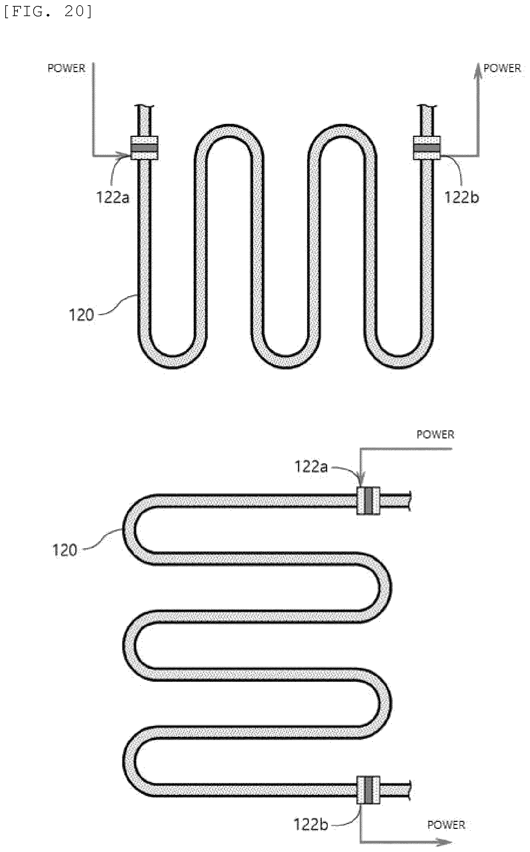

The previous drawings show that the heat transfer pipe 120 is basically formed in a U shape, and the present invention is not limited thereto. A seventh embodiment of the heat transfer pipe in FIG. 20 shows that the heat transfer pipe 120 has a meandering flow path shape to have an increased contact area with the heat storage medium 210. In addition, an arrangement direction of the heat transfer pipe 120, does not necessarily require the working fluid distribution port 121 to be formed on an upper side of the pipe 120, and various modified embodiments are possible, such as forming the port 121 on a side of the pipe 120, as shown in a lower view of FIG. 20.

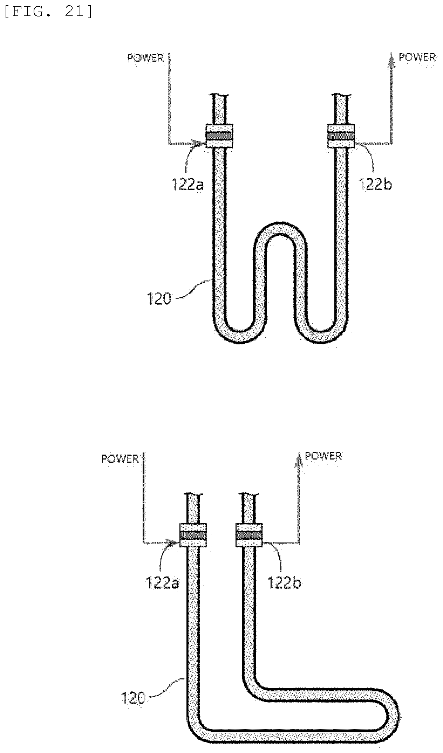

Meanwhile, when the heat storage medium 210 is the liquid, if more heat is applied to the lower heat storage medium 210, the heated heat storage medium 210 may rise due to the convection, and the less hot upper heat storage medium 210 may come down, thereby improving heat transfer efficiency. An eighth embodiment of the heat transfer pipe in FIG. 21 is designed to allow more heat to be applied to the lower heat storage medium 210 in consideration of this effect. In the eighth embodiment of the heat transfer pipe in FIG. 21, the heat transfer pipe 120 may extend or be curved to have a relatively large contact area with the heat storage medium 210 at the lower portion of the heat storage medium tank 110. An upper view of FIG. 21 shows that a lower portion of the heat transfer pipe 120 extends to be longer, and the lower view of FIG. 21 shows that the lower portion of the heat transfer pipe 120 has more curves.

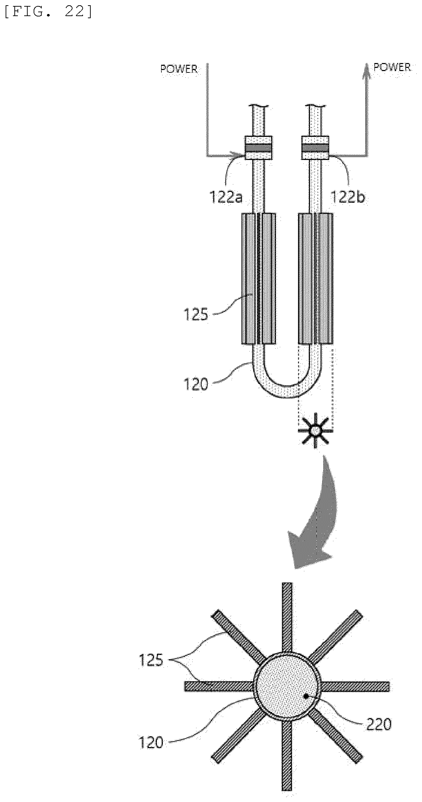

In addition, the heat transfer pipe 120 may include a heat dissipation fin 125 disposed on its outer surface to have the increased contact area with the heat storage medium 210 in order to further improve the heat exchange efficiency with the heat storage medium 210. A ninth embodiment of the heat transfer pipe in FIG. 22 effectively exemplifies this heat dissipation fin 125. In addition, in order to indicate the working fluid 220 in the heat transfer pipe 120, the previous drawings show a side view of the electrical cutoff joint 123, and show only a cross-sectional view of the heat transfer pipe 120 itself. As shown in FIG. 22, the heat dissipation fin 125 may be combined with the outer surface of the heat transfer pipe 120. Therefore, in order to clearly show this connection structure, an upper view of FIG. 22 shows a side view of the heat transfer pipe 120 rather than its cross-sectional view.

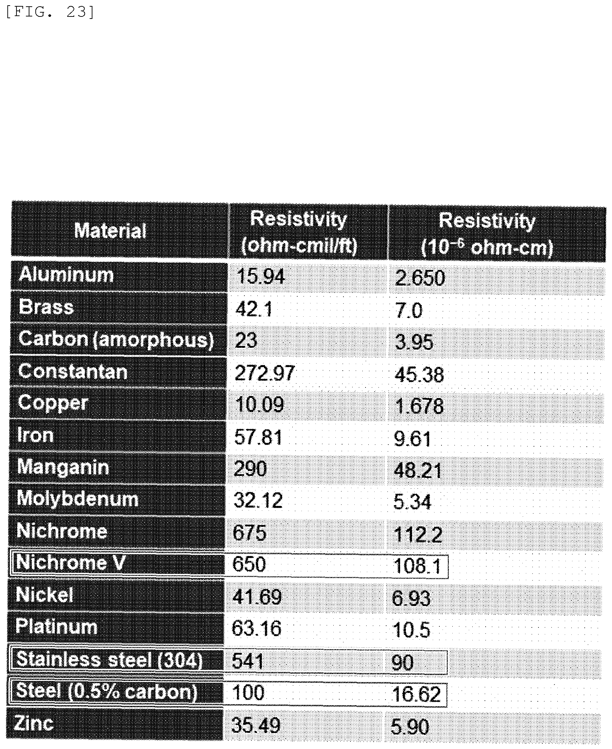

As described above, the heat transfer pipe 120 may be made of the material that directly generates heat by the power applied thereto. In this case, it may be more advantageous as the heat transfer pipe 120 has higher electrical resistance. FIG. 23 shows the electrical resistances of various materials. A material of a wire commonly used as a heating resistance wire is known as nichrome. In addition, a material of a member commonly used as the pipe is known as stainless steel or steel. As shown in FIG. 23, it may be seen that these resistance values have the same approximate magnitude (order of magnitudes). Therefore, it may be seen that the heat transfer pipe 120 is implemented as a general stainless steel pipe or a steel pipe.

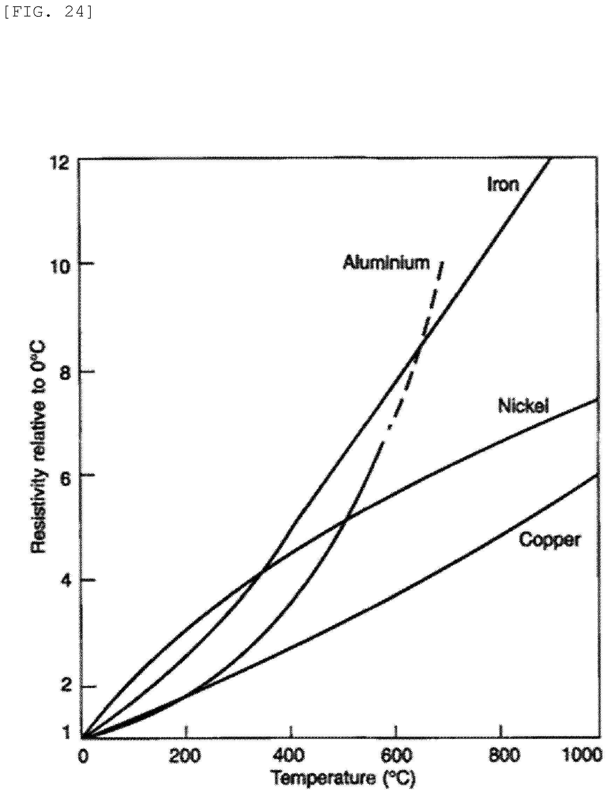

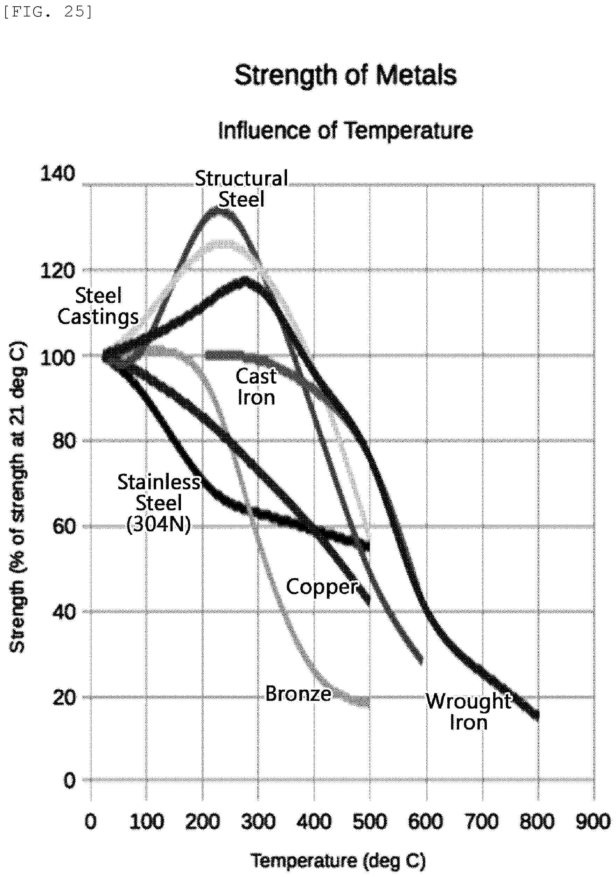

However, it is necessary to consider not only the electrical resistance of the heat transfer pipe 120 but also various other factors thereof. For example, when the heat storage medium 210 is salt, its corrosivity may be determined based on whether the salt includes moisture, and it is thus also necessary to consider this point when selecting the material of the pipe 120 (this point may also be a condition for selecting the material of the heat storage medium). In addition, when the heat storage medium 210 is molten salt, the medium 210 may need to be maintained at hundreds of degrees Celsius to maintain its molten state. That is, it is necessary to consider that the heat transfer pipe 120 is required to be disposed in a high temperature environment of about several hundred degrees Celsius. It is known that most metals have their strength significantly weakened in the high temperature environment, and their electrical resistances are changed. FIG. 24 shows a graph of electrical conductivities based on temperatures of the various materials, and FIG. 25 shows a graph of strengths based on the temperatures of the various materials, respectively. As shown in FIG. 24, the electrical conductivity may be increased as the temperature is increased, which indicates that the electrical resistance is decreased as the temperature is increased. In addition, as shown in FIG. 25, some materials may have a strength which tends to be increased and then decreased as the temperature is increased, and some materials may have a strength which tends to be steadily decreased as the temperature is increased. When considering FIGS. 24 and 25 together, it may be seen as a realistic limit that the temperature in the high temperature environment around the heat transfer pipe 120 is up to about 600°C. In this way, the heat transfer pipe 120 may be appropriately determined by considering the various factors as described above.

### [3] Application Example of the Electrical and High-Temperature Energy Storage Device According to the Present Invention

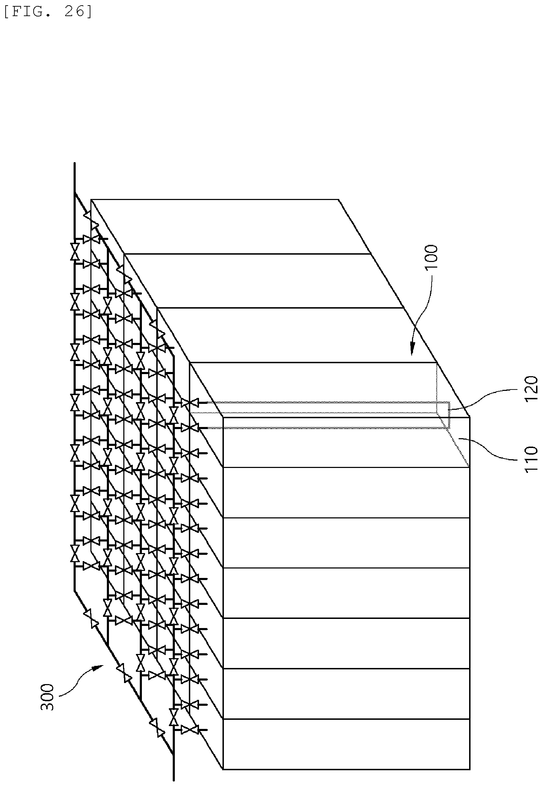

As described above, the electrical and high-temperature energy storage device of the present invention may be basically formed in the form of a module having a simple structure, and thus be very easily implemented to have the large-capacity use. That is, as shown in a first embodiment of the large-capacity use in FIG. 26, the device 100 may easily implement large-capacity use by disposing only a pipe system 300 connected to each of the heat transfer pipes 120 and adjusting the distribution of the working fluid 220 when the plurality of devices 100 are disposed between the high-temperature energy source 510 and the low-temperature energy source 520. As in the first embodiment of the large-capacity use in FIG. 26, for convenience of production and transportation, the entire system may be particularly manufactured separately and then transported using a ship while floating on the water, and when the entire system is too heavy, the heat storage medium may be transported without being filled with the fluid, and installed and then filled with the fluid, and the like, thereby also significantly improving user convenience.

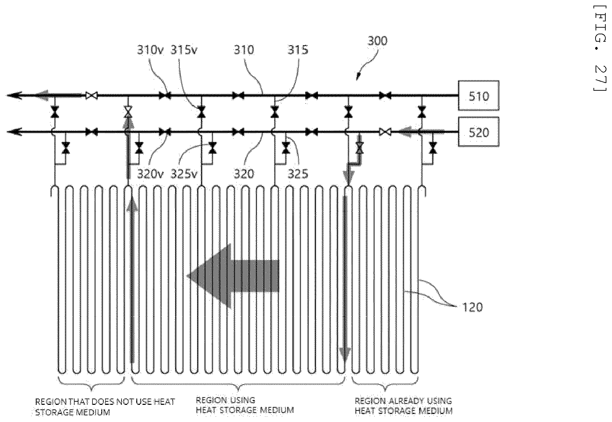

FIG. 27 shows a second embodiment of the large-capacity use of the electrical and high-temperature energy storage device according to the present invention. The second embodiment of the large-capacity use in FIG. 27 discloses a more elaborate embodiment of the pipe system 300. In this case, the pipe system may include a high temperature header 310, a high temperature pipe 315, a low temperature header 320, a low temperature pipe 325, and valves disposed thereon. A more detailed description is provided below.

The high temperature header 310 may be connected to the high-temperature energy source 510 to thus distribute the relatively high-temperature working fluid 220. Similarly, the low temperature header 320 may be connected to the low-temperature energy source 520 to thus distribute the relatively low-temperature working fluid 220.

The plurality of high temperature pipes 315 may serve to connect the high temperature header 310 to the heat transfer pipe 120 disposed in each of the plurality of electrical and high-temperature energy storage devices 100. Similarly, the plurality of low temperature pipes 325 may serve to connect the low temperature header 320 to the heat transfer pipe 120 disposed on each of the plurality of electrical and high-temperature energy storage devices 100.

At least one high temperature header valve 310v may be disposed on the high temperature header 310 and between the plurality of high temperature pipes 315. Similarly, at least one low temperature header valve 320v may be disposed on the low temperature header 320 and between the plurality of low temperature pipes 325. A high temperature pipe valve 315v may be disposed on the high temperature pipe 315, and a low temperature pipe valve 325v may be disposed on the low temperature pipe 325.

When disposed in this way, the pipe system 300 may control the working fluid 220 to flow only to the heat transfer pipe 120 at a desired location by selectively opening and closing the various valves.

In the second embodiment of the large-capacity use in FIG. 27, a black color indicates that the valve is closed, and a white color indicates that the valve is opened. In the valve opening and closing state as shown in FIG. 27, the working fluid discharged from the low-temperature energy source 520 may proceed to the high-temperature energy source 510 in a direction indicated by an arrow. That is, the working fluid may pass through only the heat transfer pipes 120 in a region indicated as a "region using the heat storage medium". In other words, the working fluid does not pass through the heat transfer pipes 120 in a region indicated as a "region that does not use the heat storage medium" or a "region already using the heat storage medium".

The "region already using the heat storage medium" refers to a region where the working fluid already recovered a lot of energy by passing through the same previously, and little energy is stored. This region may have practically no energy recovery effect and only unnecessarily increase a flow path length of the working fluid. Flow path resistance may practically exist in the flow path, and the flow rate of the working fluid may be decreased as the flow path length is longer. Therefore, when configuring an actual facility, it is necessary to dispose the pump at an appropriate location to thus pump more of the working fluid in order for the working fluid to smoothly flow, which is also an operation of unnecessarily consuming the energy. However, adjusting the valve opening and closing as shown in FIG. 27 may prevent the working fluid from passing through the "region already using the heat storage medium", thereby appropriately and effectively reducing the flow path length of the working fluid.

In addition, the working fluid does not pass through the "region that does not use the heat storage medium" either, and the heat energy stored in the "region that does not use the heat storage medium" may thus remain without being consumed. The working fluid may recover the energy while being moved from the low-temperature energy source 520 to the high-temperature energy source 510, and when reaching the high-temperature energy source 510, such as the steam turbine, the working fluid may use the energy such as generating the electricity by rotating the turbine. Here, if the working fluid always passes through the entire heat storage medium, there is a risk that more energy may be used than necessary, and the stored energy may be consumed unnecessarily. According to the embodiment shown in FIG. 27, the appropriate valve opening and closing may enable selective adjustment of the region through which the working fluid passes, that is, the region where energy is recovered, thus making it possible to easily overcome such problems.

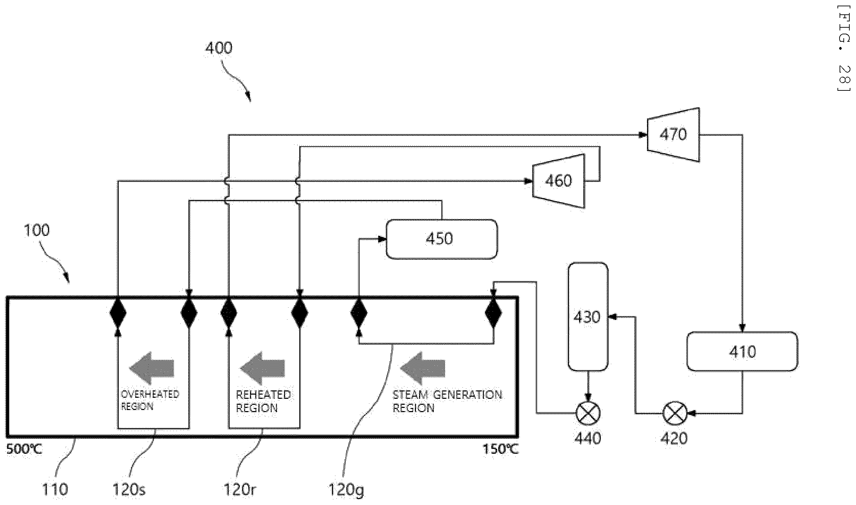

FIG. 28 shows an embodiment of a process using the electrical and high-temperature energy storage device according to the present invention. That is, FIG. 28 shows one embodiment where an energy storage and recovery system 400 includes the electrical and high-temperature energy storage device 100 as described above. In this case, the heat storage medium tank 110 may extend horizontally, the temperature gradient of the heat storage medium 210 from a low temperature to a high temperature may be formed from one side of the heat storage medium tank 110 to the other side, and a steam generation region, a reheated region, and an overheated region may be sequentially formed from the low temperature side to the high temperature side. In addition, the energy storage and recovery system 400 may circulate the working fluid 220 here in a loop from a condenser 410 to a low-temperature turbine 470, thereby effectively recovering the energy. Each part is described in more detail as follows.

The condenser 410 may serve to condense and discharge the working fluid 220. A low-temperature condensate pump 420 may serve to pump the relatively low-temperature working fluid 220 discharged from the condenser 410. A deaerator 430 may serve to separate gas/liquid from the low-temperature working fluid 220 discharged from the low-temperature condensate pump 420. A high-temperature condensate pump 440 may serve to pump the relatively high-temperature working fluid 220 discharged from the deaerator 430. A steam generation region-heat transfer pipe 120g may be disposed in the steam generation region, and allow the working fluid 220 discharged from the high-temperature condensate pump 440 to evaporate while passing through the steam generation region-heat transfer pipe 120g. A steam storage part 450 may serve to store steam of the working fluid 220 discharged from the steam generation region-heat transfer pipe 120g. An overheated region-heat transfer pipe 120s may be disposed in the overheated region, and allow the working fluid 220 discharged from the steam storage part 450 to be overheated while passing through the overheated region-heat transfer pipe 120s. A high-temperature turbine 460 may be rotated by the relatively high-temperature working fluid 220 discharged from the overheated region-heat transfer pipe 120s to thus perform the power generation or the like, thereby recovering the energy. A reheated region-heat transfer pipe 120r may be disposed in a reheated region, and allow the working fluid 220 discharged from the high-temperature turbine 460 to be reheated while passing through the reheated region-heat transfer pipe 120r. A low-temperature turbine 470 may be rotated by the relatively low-temperature working fluid 220 discharged from the reheated region-heat transfer pipe 120r to thus perform the power generation or the like, thereby recovering the energy once more. In this way, the working fluid 220 discharged from the low-temperature turbine 470 may flow back in the condenser 410 to thus be circulated, and the energy may be effectively and smoothly recovered through this circulation.

The present invention is not limited to the abovementioned embodiments, and may be variously applied. In addition, the present invention may be variously modified by those skilled in the art to which the present invention pertains without departing from the gist of the present invention claimed in the claims.

### [Industrial Applicability]

The present invention may store both high-temperature energy and electrical energy without any separate conversion device, store even low-quality electrical energy, smoothly store electrical energy having wildly fluctuating amounts by performing local heating using the electrical energy, and produce high-quality electrical energy regardless of a quality of inflowing energy. In addition, the present invention may be electrically safe because the present invention may use water or air as a working fluid, select any of various heat storage media, and thus also use latent heat of a heat storage medium, and the heat storage medium may act as electrical cutoff. In addition, the device itself has a simple structure, and accordingly, the present invention may not only have improved manufacturing ease and economic feasibility, but also enable simple large-capacity use using a module concept. Accordingly, the present invention has remarkably improved ease of installation and economic feasibility compared to a conventional energy storage device, and is thus very advantageous for its application to an industrial site.

## Claims

1. An electrical and high-temperature energy storage device comprising:
a heat storage medium tank 110 which accommodates a heat storage medium 210; and
a heat transfer pipe 120 which has a pipe shape,
through which a working fluid 220 is distributed, the working fluid 220 being distributed between a high-temperature energy source 510 and a low-temperature energy source 520, the high-temperature energy source 510 providing a relatively high temperature environment, and the low-temperature energy source 520 providing a relatively low temperature environment, through a working fluid distribution port 121 disposed at each of two ends,
which has a portion accommodated in the heat storage medium tank 110, and
a heating device heated by power is at least partially disposed at the portion accommodated in the heat storage medium tank 110.

2. The device 100 of claim 1, wherein in an energy storage mode,
heat energy is transferred from the relatively high-temperature working fluid 220, flowing from the high-temperature energy source 510 to the low-temperature energy source 520 through the heat transfer pipe 120, to the heat storage medium 210 in the heat storage medium tank 110, or
the heating device at the heat transfer pipe 120 is heated by power applied from the outside to thus transfer the heat energy to the heat storage medium 210 in the heat storage medium tank 110.

3. The device 100 of claim 1, wherein in an energy recovery mode,
heat energy is transferred from the heat storage medium 210 in the heat storage medium tank 110 to the relatively low-temperature working fluid 220 flowing from the low-temperature energy source 520 to the high-temperature energy source 510 through the heat transfer pipe 120.

4. The device 100 of claim 1, wherein the at least one device 100 is disposed between the high-temperature energy source 510 and the low-temperature energy source 520.

5. The device 100 of claim 1, wherein the at least one heat transfer pipe 120 is disposed in the one heat storage medium tank 110.

6. The device 100 of claim 1, further comprising at least one connection pipe 130 communicating the plurality of heat transfer pipes 120 to each other
when the plurality of devices 100 are disposed between the high-temperature energy source 510 and the low-temperature energy source 520, or the plurality of heat transfer pipes 120 are disposed in the one heat storage medium tank 110.

7. The device 100 of claim 1, wherein in an energy storage mode,
in each of the heat transfer pipes 120,
at least one selected from the high-temperature working fluid 220 or electric heating is appropriately selected to transfer the heat energy to the heat storage medium 210 independently of each other
when the plurality of devices 100 are disposed between the high-temperature energy source 510 and the low-temperature energy source 520, or the plurality of heat transfer pipes 120 are disposed in the one heat storage medium tank 110.

8. The device 100 of claim 1, wherein at least one isolation wall 111 is formed in the heat storage medium tank 110 to isolate and separate spaces where the respective heat transfer pipes 120 are disposed
when the plurality of heat transfer pipes 120 are disposed in the one heat storage medium tank 110.

9. The device 100 of claim 8, wherein at least one through hole 112 is formed in the isolation wall 111 to allow a fluid movement between the adjacent spaces isolated and separated from each other.

10. The device 100 of claim 1, comprising a gas discharge pipe 140 for discharging non-reactive gas through at least one gas discharge port 141 disposed at a lower portion of the heat storage medium tank 110 and disposed toward the heat transfer pipe 120.

11. The device 100 of claim 10, comprising a particle remover 142 removing a particle of the heat storage medium that is accompanied by a droplet from the gas discharged from the gas discharge pipe 140.

12. The device 100 of claim 10, comprising:
a re-circulation compressor 145 compressing and forcibly blowing gas discharged from the heat storage medium tank 110 and re-circulating the gas; and
a gas storage tank 146 storing surplus gas other than the gas re-circulated to the gas discharge pipe 140 among the gas blown by the re-circulation compressor 145, or discharging a portion of the stored gas to supplement the gas re-circulated to the gas discharge pipe 140.

13. The device 100 of claim 12, comprising a salt droplet remover disposed in front of the re-circulation compressor 145 and removing a salt droplet included in the gas,
wherein the salt droplet remover removes the salt droplet by cooling and solidifying the salt droplet using a coolant, and
the salt droplet remover is an internal salt droplet remover 143 disposed inside the heat storage medium tank 110, or is an external salt droplet remover 144 disposed in a gas circulation flow path outside the heat storage medium tank 110.

14. The device 100 of claim 1, comprising:
a pump 151 disposed in the heat storage medium tank 110 and sending a portion of the heat storage medium 210 to another portion; or
a stirrer 152 disposed in the heat storage medium tank 110 and forming a flow in the heat storage medium 210,
to cause the forced flow of the heat storage medium 210 in the heat storage medium tank 110.

15. The device 100 of claim 1, wherein the heat storage medium tank 110 is sealed and insulated to be isolated from the outside.

16. The device 100 of claim 1, wherein the heat storage medium tank 110 is insulated from the heat transfer pipe 120.

17. The device 100 of claim 16, wherein the heat storage medium tank 110 is made of an insulating material, or
made of a conductive material and an electrical cutoff part 113 or an electrical cutoff flange 114 is disposed at a connection portion with the heat transfer pipe 120.

18. The device 100 of claim 1, wherein the heat transfer pipe 120 includes
a power inlet 122a and a power outlet 122b, through which the power passes, and
an electrical cutoff joint 123 insulating another portion of the heat transfer pipe 120 from its portion to which the power is applied through the power inlet 122a or the power outlet 122b.

19. The device 100 of claim 18, wherein the heat transfer pipe 120 includes a shutoff valve 126 disposed at the working fluid distribution port 121, and
a sealing part of the shutoff valve 126 serves as the electrical cutoff joint 123.

20. The device 100 of claim 18, wherein in the heat transfer pipe 120,
the power inlet 122a and the power outlet 122b are formed outside the heat storage medium tank 110, or
the power inlet 122a and the power outlet 122b are formed below a water level of the heat storage medium 210 accommodated in the heat storage medium tank 110.

21. The device 100 of claim 18, wherein the heat transfer pipe 120 is made of a material that generates heat when the power is applied thereto, and
the power inlet 122a and the power outlet 122b are directly connected to the heat transfer pipe 120.

22. The device 100 of claim 21, wherein the heat transfer pipe 120 has a plurality of regions having different electrical resistances.

23. The device 100 of claim 18, wherein the heat transfer pipe 120 has a separate heating line 124 wound around an outer surface and insulated from the outside, and
the power inlet 122a and the power outlet 122b are connected to the heating line 124.

24. The device 100 of claim 18, wherein the heat transfer pipe 120 partially has a direct heating part A made of a material that generates heat when the power is applied thereto, and
partially has an indirect heating part B provided with a separate heating line 124 wound around an outer surface of the heat transfer pipe 120 and insulated from the outside,
the direct heating part A and the indirect heating part B being connected in series to each other.

25. The device 100 of claim 1, wherein the heat transfer pipe 120 has a meandering flow path shape to have an increased contact area with the heat storage medium 210.

26. The device 100 of claim 1, wherein the heat transfer pipe 120 extends or is curved to have a relatively large contact area with the heat storage medium 210 at the lower portion of the heat storage medium tank 110.

27. The device 100 of claim 1, wherein the heat transfer pipe 120 includes a heat dissipation fin 125 disposed on an outer surface to have an increased contact area with the heat storage medium 210.

28. The device 100 of claim 1, wherein a pipe system 300 connected to each of the heat transfer pipes 120 and adjusting the distribution of the working fluid 220 is disposed
when the plurality of devices 100 are disposed between the high-temperature energy source 510 and the low-temperature energy source 520.

29. The device 100 of claim 28, wherein the pipe system 300 includes
a high temperature header 310 connected to the high-temperature energy source 510 to thus distribute the relatively high-temperature working fluid 220,
a plurality of high temperature pipes 315 connecting the high temperature header 310 to the heat transfer pipe 120 disposed in each of the plurality of electrical and high-temperature energy storage devices 100,
at least one high temperature header valve 310v disposed on the high temperature header 310 and between the plurality of high temperature pipes 315,
a high temperature pipe valve 315v disposed on the high temperature pipe 315,
a low temperature header 320 connected to the low-temperature energy source 520 to thus distribute the relatively low-temperature working fluid 220,
a plurality of low temperature pipes 325 connecting the low temperature header 320 to the heat transfer pipe 120 disposed on each of the plurality of electrical and high-temperature energy storage devices 100,
at least one low temperature header valve 320v disposed on the low temperature header 320 and between the plurality of low temperature pipes 325, and
a low temperature pipe valve 325v disposed on the low temperature pipe 325.

30. An energy storage and recovery system 400 which includes an electrical and high-temperature energy storage device 100 of claim 1, and in which a heat storage medium tank 110 extends horizontally, a temperature gradient of the heat storage medium 210 from a low temperature to a high temperature is formed from one side of the heat storage medium tank 110 to the other side, and a steam generation region, a reheated region, and an overheated region are sequentially formed from the low temperature side to the high temperature side, the system comprising:
a condenser 410 condensing and discharging a working fluid 220;
a low-temperature condensate pump 420 pumping the relatively low-temperature working fluid 220 discharged from the condenser 410;
a deaerator 430 separating gas/liquid from the relatively low-temperature working fluid 220 discharged from the low-temperature condensate pump 420;
a high-temperature condensate pump 440 pumping the relatively high-temperature working fluid 220 discharged from the deaerator 430;
a steam generation region-heat transfer pipe 120g disposed in the steam generation region, and allowing the working fluid 220 discharged from the high-temperature condensate pump 440 to evaporate while passing through the steam generation region-heat transfer pipe 120g;
a steam storage part 450 storing steam of the working fluid 220 discharged from the steam generation region-heat transfer pipe 120g;
an overheated region-heat transfer pipe 120s disposed in the overheated region, and allowing the working fluid 220 discharged from the steam storage part 450 to be overheated while passing through the overheated region-heat transfer pipe 120s;
a high-temperature turbine 460 rotated by the relatively high-temperature working fluid 220 discharged from the overheated region-heat transfer pipe 120s;
a reheated region-heat transfer pipe 120r disposed in the reheated region, and allowing the working fluid 220 discharged from the high-temperature turbine 460 to be reheated while passing through the reheated region-heat transfer pipe 120r; and
a low-temperature turbine 470 rotated by the relatively low-temperature working fluid 220 discharged from the reheated region-heat transfer pipe 120r,
wherein the working fluid 220 discharged from the low-temperature turbine 470 flows in the condenser 410 to thus be circulated.
